(19) Europäisches Patentamt
European Patent Office
Office européen des brevets

(11) Veröffentlichungsnummer: **0 128 460**
**A2**

(12) # EUROPÄISCHE PATENTANMELDUNG

(21) Anmeldenummer: **84106153.4**

(22) Anmeldetag: **30.05.84**

(51) Int. Cl.³: **A 01 N 47/36**, A 01 N 43/66, A 01 N 43/64 // (A01N47/36, 37/48),(A01N43/66, 37/48),(A01N43/64, 37/48)

(30) Priorität: **11.06.83 DE 3321182**

(43) Veröffentlichungstag der Anmeldung: **19.12.84 Patentblatt 84/51**

(84) Benannte Vertragsstaaten: **AT BE CH DE FR GB IT LI NL SE**

(71) Anmelder: **BAYER AG, Konzernverwaltung RP Patentabteilung, D-5090 Leverkusen 1 Bayerwerk (DE)**

(72) Erfinder: **Hack, Helmuth, Dr., Theodor-Storm-Weg 2, D-5068 Odenthal (DE)**
Erfinder: **Schmidt, Robert R., Dr., Im Waldwinkel 110, D-5060 Bergisch-Gladbach 2 (DE)**

(54) **Mittel zur selektiven Unkrautbekämpfung.**

(57) Die neuen Wirkstoffkombinationen aus
(a) 5-(2,4-Dichlor-phenoxy)-2-nitro-benzoesäure-methylester der Formel

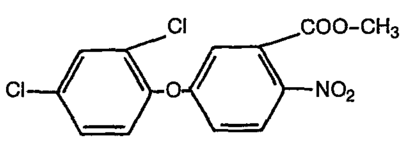
(I)

und

(b) 1,3-Dimethyl-3-(2-benzthiazolyl)-harnstoff der Formel

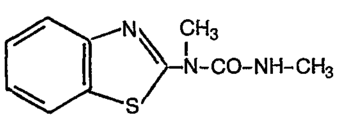
(II)

oder

1-Amino-3-(2,2-dimethyl-propyl)-6-ethylthio-1,3,5-triazin-2,4-(1H,3H)-dion der Formel

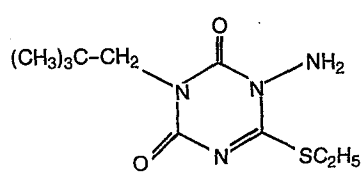
(III)

oder

4-Amino-6-tert.-butyl-3-ethylthio-1,2,4-triazin-5(4H)-on der Formel

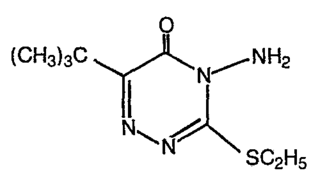
(IV)

eignen sich sehr gut zur selektiven Unkrautbekämpfung in Nutzpflanzenkulturen.

BAYER AKTIENGESELLSCHAFT 5090 Leverkusen, Bayerwerk

Konzernverwaltung RP
Patentabteilung Dü/ABc

III

## Mittel zur selektiven Unkrautbekämpfung

Die vorliegende Erfindung betrifft neue Wirkstoffkombinationen, die aus einem bekannten Benzoesäure-ester einerseits und bekannten heterocyclischen Verbindungen andererseits bestehen und besonders gut zur selektiven Unkrautbekämpfung in Nutzpflanzenkulturen geeignet sind.

Es ist bereits bekannt geworden, daß man 5-(2,4-Dichlorphenoxy)-2-nitro-benzoesäure-methylester zur selektiven Unkrautbekämpfung einsetzen kann (vgl. R. Wegler "Chemie der Pflanzenschutz- und Schädlingsbekämpfungsmittel" Springer-Verlag, Berlin/Heidelberg/New York, 1977, Band 5, Seite 76). Weiterhin ist bekannt, daß man den 1,3-Dimethyl-3-(2-benzthiazolyl)-harnstoff als selektiv wirkendes Herbizid verwenden kann (vgl. BE-PS 687 019).

Ferner wurde schon beschrieben, daß sich 1-Amino-3-(2,2-dimethyl-propyl)-6-ethylthio-1,3,5-triazin-2,4-(1H,3H)-dion zur selektiven Unkrautbekämpfung verwenden läßt (vgl. DK-PS 136 067). Schließlich ist bekannt, daß sich

Unkräuter mit Hilfe von 4-Amino-6-tert.-butyl-3-ethylthio-1,2,4-triazin-5(4H)-on selektiv bekämpfen lassen (vgl. US-PS 3 671 523). Die vorgenannten Stoffe zeigen eine gute Verträglichkeit in Nutzpflanzenkulturen, insbesondere in Getreidekulturen, weisen aber gegenüber wichtigen Unkräutern und Ungräsern manchmal gewisse Schwächen in der herbiziden Wirksamkeit auf.

Es wurde nun gefunden, daß die neuen Wirkstoffkombinationen aus

(a) 5-(2,4-Dichlor-phenoxy)-2-nitro-benzoesäure-methylester der Formel

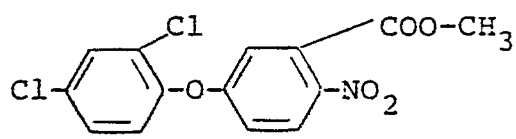

(I)

und

(b) 1,3-Dimethyl-3-(2-benzthiazolyl)-harnstoff der Formel

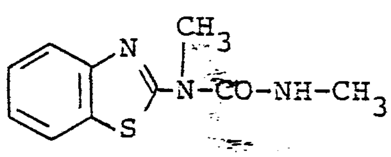

(II)

oder

1-Amino-3-(2,2-dimethyl-propyl)-6-ethylthio-1,3,5-triazin-2,4-(1H,3H)-dion der Formel

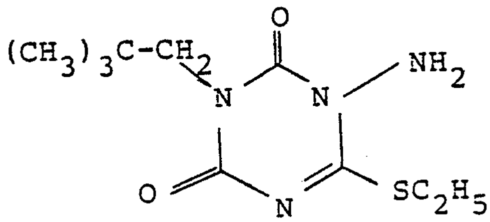

(III)

oder

4-Amino-6-tert.-butyl-3-ethylthio-1,2,4-triazin-5(4H)-on der Formel

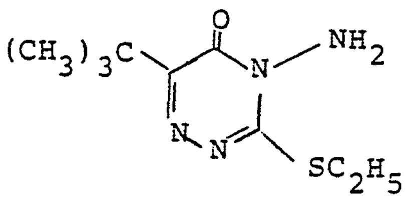

(IV)

eine besonders gute selektive herbizide Wirksamkeit aufweisen.

Überraschenderweise ist die herbizide Wirksamkeit der erfindungsgemäßen Wirkstoffkombinationen wesentlich höher als die Summe der Wirkungen der einzelnen Wirkstoffe. Es liegt also ein nicht vorhergesehener synergistischer Effekt vor und nicht nur eine Wirkungsergänzung.

Die in den erfindungsgemäßen Wirkstoffkombinationen enthaltenen Wirkstoffe sind bereits bekannt (vgl. R. Wegler "Chemie der Pflanzenschutz- und Schädlingsbekämpfungsmittel", Springer-Verlag, Berlin/Heidelberg/New York, 1977, Band 5, Seite 76; BE-PS 687 019; DK-PS 136 067 und US-PS 3 671 523).

Wenn die Wirkstoffe in den erfindungsgemäßen Wirkstoffkombinationen in bestimmten Gewichtsverhältnissen vorliegen, zeigt sich der synergistische Effekt besonders deutlich. Die Gewichtsverhältnisse an Wirkstoffen können in den Wirkstoffkombinationen jedoch in relativ großen Bereichen schwanken. Im allgemeinen entfallen auf 1 Gewichtsteil an dem unter (a) genannten Benzoesäure-ester der Formel (I) 0,01 bis 10 Gew.-Teile, vorzugsweise 0,02 bis 5 Gewichtsteile an einem der unter (b) aufgeführten Wirkstoffe.

Die erfindungsgemäßen Wirkstoffkombinationen zeigen eine sehr gute Wirkung gegen Unkräuter und Ungräser in Nutzpflanzenkulturen, insbesondere in Getreide. Unter Unkräutern und Ungräsern im weitesten Sinne sind alle Pflanzen zu verstehen, die an Orten wachsen, wo sie unerwünscht sind.

Die erfindungsgemäßen Wirkstoffkombinationen können z.B. bei den folgenden Pflanzen verwendet werden:

Dikotyle Unkräuter der Gattungen: Sinapis, Lepidium, Galium, Stellaria, Matricaria, Anthemis, Galinsoga, Chenopodium, Urtica, Senecio, Amaranthus, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dikotyle Kulturen der Gattungen: Gossypium, Glycine,

Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Besonders hervorzuheben ist die gute Wirksamkeit der erfindungsgemäßen Wirkstoffkombinationen gegen schwer bekämpfbare Unkräuter sowie gegen schwer bekämpfbare Ungräser. Von entscheidendem Vorteil ist es, daß solche üblicherweise schwer bekämpfbaren Unkräuter und Ungräser mit den erfindungsgemäßen Wirkstoffkombinationen gleichzeitig bekämpft werden können.

Ein Einsatz der erfindungsgemäßen Wirkstoffkombinationen zur selektiven Unkrautbekämpfung ist vorzugsweise möglich in Mais und anderen Getreidekulturen, wie z.B. Hafer, Gerste, Weizen und Roggen.

Die Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe, Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glycol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:
z.B. Ammoniumsalze und natürliche Gesteinsmehle, wie Kaoline, Tonerden, Talkum, Kreide, Quarz, Attapulgit,

Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Als weitere Zusätze kommen auch Ammoniumrhodanid, Lecithine, Phospholipide und Isopropylmyristat in Betracht.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 %.

Die erfindungsgemäßen Wirkstoffkombinationen können als solche oder in ihren Formulierungen auch in Mischung mit bekannten Herbiziden zur Unkrautbekämpfung Verwendung finden, wobei Fertigformulierung oder Tankmischung möglich ist. Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die Wirkstoffkombinationen können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die erfindungsgemäßen Wirkstoffkombinationen können sowohl vor als auch nach dem Auflaufen der Pflanzen appliziert werden. Sie können auch vor der Saat in den Boden eingearbeitet werden.

Die aufgewandte Wirkstoffmenge kann in größeren Bereichen schwanken. Sie hängt im wesentlichen von der Art des gewünschten Effektes ab. Im allgemeinen liegt die Aufwandmenge zwischen 0,5 und 10 kg Wirkstoff pro ha, vorzugsweise zwischen 1 und 5 kg/ha.

Die gute herbizide Wirkung der erfindungsgemäßen Wirkstoffkombinationen geht aus den nachfolgenden Beispielen hervor. Während die einzelnen Wirkstoffe in der herbiziden Wirkung Schwächen aufweisen, zeigen die Kombinationen eine Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzeln applizierten Wirkstoffe.

Die zu erwartende Wirkung für eine gegebene Kombination zweier Herbizide kann (vgl. Colby, S. R., "Calculating synergistic and antagonistic responses of herbicide combinations", Weeds 15, Seiten 20-22, 1967) wie folgt berechnet werden:

Wenn X = % Schädigung durch Herbizid A und p kg/ha Aufwandmenge

und Y = % Schädigung durch Herbizid B bei q kg/ha Aufwandmenge

und E = % die erwartete Schädigung der Herbizide A und B bei p und q kg/ha Aufwandmenge bedeutet,

dann ist $E = X + Y - \frac{X \cdot Y}{100}$.

Ist die tatsächliche Schädigung größer als berechnet, so ist die Kombination in ihrer Wirkung überadditiv, d.h. es liegt ein synergistischer Effekt vor.

Die gefundene herbizide Wirkung der erfindungsgemäßen Wirkstoffkombinationen ist bei den Unkräutern und Ungräsern größer als die berechnete, d.h. es liegt ein echter synergistischer Effekt vor.

Beispiel A

Post-emergence-Test / Freiland

Lösungsmittel: 5 Gewichtsteile Aceton
Emulgator: 1 Gewichtsteil Alkylarylpolyglykolether

Zur Herstellung einer zweckmäßigen Wirkstoffzubereitung wurde 1 Gewichtsteil Wirkstoff bzw. Wirkstoffgemisch mit der angegebenen Menge Lösungsmittel vermischt, die angegebene Menge Emulgator zugegeben und das Konzentrat anschließend mit Wasser auf die gewünschte Konzentration verdünnt.

Im Freiland wurden Parzellen mit Testpflanzen, welche eine Höhe von etwa 3 - 10 cm hatten, mit einer solchen Menge der Wirkstoffzubereitung bespritzt, daß eine gleichmäßige Benetzung der Pflanzen eintrat. Entscheidend dabei ist die Aufwandmenge des Wirkstoffes bzw. des Wirkstoffgemisches pro Flächeneinheit. Nach 11 Tagen wurde der Schädigungsgrad der Pflanzen bonitiert in % Schädigung im Vergleich zur unbehandelten Kontrolle. Es bedeuten:

0 % = unbehandelte Kontrolle/keine Wirkung
100 % = Totale Vernichtung.

Wirkstoffe, Wirkstoffkonzentrationen und Versuchsergebnisse gehen aus der folgenden Tabelle hervor:

Tabelle A  Post-emergence Test / Freiland

| Wirkstoff [1] bzw. Wirkstoffgemisch | Wirkstoffkonzentration in kg/ha | Schädigungsgrad in % Weizen gef. [2] | ber. [3] | Stellaria gef. | ber. | Matricaria gef. | ber. |
|---|---|---|---|---|---|---|---|
| I | 1 | 0 | | 30 | | 45 | |
| II | 2,8 | 0 | | 50 | | 50 | |
| III | 1,4 | 0 | | 30 | | 38 | |
| IV | 1,4 | 0 | | 33 | | 50 | |
| I + II | 1 + 2,8 | 0 | 0 | 80 | 65 | 90 | 72,5 |
| I + III | 1 + 1,4 | 0 | 0 | 78 | 51 | 85 | 77,9 |
| I + IV | 1 + 1,4 | 0 | 0 | 75 | 53,1 | 88 | 72,5 |

1) vgl. Wirkstoff-Tabelle

2) gef. = gefundene Schädigung bzw. Wirkung

3) ber. = berechnete Schädigung bzw. Wirkung nach der oben angegebenen Colby-Gleichung

Wirkstofftabelle

(I) = 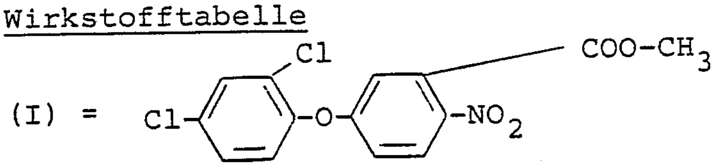

(II) = 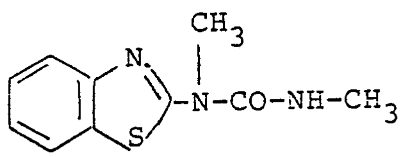

(III) = 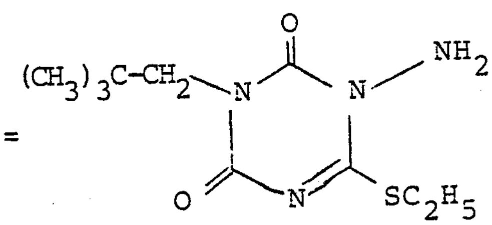

(IV) = 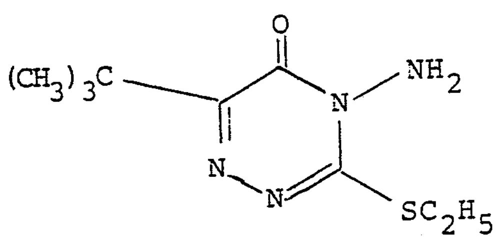

Patentansprüche

1) Herbizide Mittel zur selektiven Unkrautbekämpfung in Nutzpflanzenkulturen, gekennzeichnet durch einen Gehalt an einer Wirkstoffkombination bestehend aus

(a) 5-(2,4-Dichlor-phenoxy)-2-nitro-benzoesäuremethylester der Formel

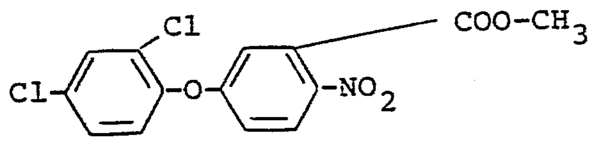

(I)

und

(b) 1,3-Dimethyl-3-(2-benzthiazolyl)-harnstoff der Formel

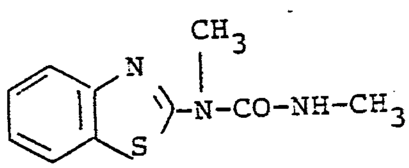

(II)

oder

1-Amino-3-(2,2-dimethyl-propyl)-6-ethylthio-1,3,5-triazin-2,4-(1H,3H)-dion der Formel

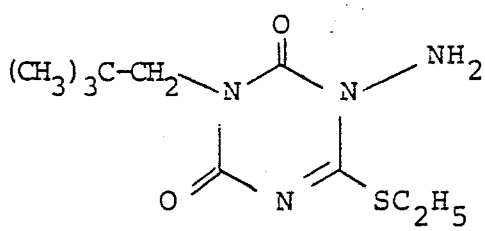

(III)

oder

4-Amino-6-tert.-butyl-3-ethylthio-1,2,4-triazin-5(4H)-on der Formel

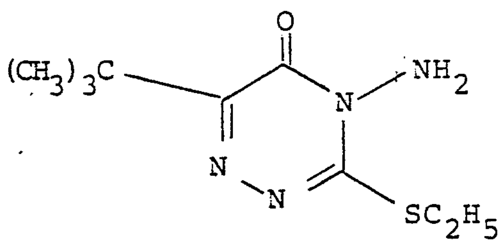

(IV)

2. Mittel gemäß Anspruch 1, dadurch gekennzeichnet, daß in den Wirkstoffkombinationen das Gewichtsverhältnis von dem unter (a) genannten Wirkstoff der Formel (I) zu einem der unter (b) aufgeführten Wirkstoffe der Formeln (II), (III) oder (IV) zwischen 1:0,01 und 1:10 liegt.

3. Verfahren zur selektiven Unkrautbekämpfung in Nutzpflanzenkulturen, dadurch gekennzeichnet, daß man Wirkstoffkombinationen aus dem Wirkstoff der Formel (I) mit einem Wirkstoff der Formel (II), (III) oder (IV) auf die Pflanzen und/oder ihren Lebensraum ausbringt.

4. Verwendung von Wirkstoffkombinationen aus dem Wirkstoff der Formel (I) mit einem Wirkstoff der Formel (II), (III) oder (IV) zur selektiven Unkrautbekämpfung in Nutzpflanzenkulturen.

5. Verfahren zur Herstellung von herbiziden Mitteln zur selektiven Unkrautbekämpfung in Nutzpflanzenkulturen, dadurch gekennzeichnet, daß man Wirkstoffkombinationen aus dem Wirkstoff der Formel (I) mit einem Wirkstoff der Formel (II), (III) oder (IV) mit Streckmitteln und/oder oberflächenaktiven Stoffen vermischt.